# EUROPÄISCHE PATENTSCHRIFT

(11) **EP 2 491 271 B1**
(45) Veröffentlichungstag und Bekanntmachung des Hinweises auf die Patenterteilung: **31.08.2016**
(21) Anmeldenummer: 10786986.9
(22) Anmeldetag: 07.10.2010
(51) Int. Cl.: F16F 15/134, F16D 21/06

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 19.10.2009 DE 102009049883
(43) Veröffentlichungstag der Anmeldung: 29.08.2012
(73) Patentinhaber: Schaeffler Technologies AG & Co. KG, 91074 Herzogenaurach (DE)
(72) Erfinder: KROLL, Jürgen, 77815 Bühl (DE); MENDE, Hartmut, 77815 Bühl (DE)
(86) Internationale Anmeldenummer: PCT/DE2010/001184
(87) Internationale Veröffentlichungsnummer: WO 2011/047658

(56) Entgegenhaltungen:
- EP-A1- 1 801 446
- FR-A1- 2 871 204
- FR-A1- 2 886 996
- FR-A1- 2 918 727

## Beschreibung

Die Erfindung betrifft eine Drehmomentübertragungseinrichtung in einem Antriebsstrang eines Kraftfahrzeugs mit einem Zweimassenschwungrad mit einem mit einer Kurbelwelle einer Brennkraftmaschine fest verbundenen Eingangsteil und einem entgegen der Wirkung von über den Umfang verteilten Bogenfedern relativ gegenüber dem Eingangsteil verdrehbaren Ausgangsteil und einer dem Zweimassenschwungrad nachgeschalteten, mit zwei Getriebeeingangswellen eines Doppelkupplungsgetriebes wirksam verbundenen Doppelkupplung sowie einem Ausgleich von Axialspiel der Doppelkupplung.

Eine gattungsgemäße Drehmomentübertragungseinrichtung mit einem an einer Kurbelwelle aufgenommenen Zweimassenschwungrad und einer nachgeschalteten Doppelkupplung ist aus der DE 10 2008 004 150 A1 bekannt. Zur Kompensation von Axialspiel und Taumelschwingungen ist das Zweimassenschwungrad mit der Doppelkupplung mittels einer Steckverzahnung verbunden, die gleichzeitig bei der Endmontage als Verbindungsteil zwischen dem an der Kurbelwelle der Brennkraftmaschine aufgenommenen Zweimassenschwungrad und der am Doppelkupplungsgetriebe aufgenommenen Doppelkupplung dient.

Es ergibt sich die Aufgabe, eine Drehmomentübertragungseinrichtung weiterzuentwickeln und in einfacher Weise geräuscharm und lebensdauerfest auszulegen. Im Weiteren soll eine einfache Endmontage verschiedener an der Brennkraftmaschine und dem Doppelkupplungsgetriebe angeordneter Baugruppen der Drehmomentübertragungseinrichtung ermöglicht werden.

Die Aufgabe wird durch eine Drehmomentübertragungseinrichtung in einem Antriebsstrang eines Kraftfahrzeugs mit einem Zweimassenschwungrad mit einem mit der Kurbelwelle einer Brennkraftmaschine fest verbundenen Eingangsteil und einem entgegen der Wirkung von über den Umfang verteilten Bogenfedern relativ gegenüber dem Eingangsteil verdrehbaren Ausgangsteil und einer dem Zweimassenschwungrad nachgeschalteten, mit zwei Getriebeeingangswellen eines Doppelkupplungsgetriebes wirksam verbundenen Doppelkupplung sowie einem Ausgleich von Axialspiel der Doppelkupplung gelöst, wobei das Axialspiel zwischen dem Eingangsteil und dem Ausgangsteil des Zweimassenschwungrads ausgeglichen wird.

Dabei wird das Zweimassenschwungrad axial und drehfest mit der Doppelkupplung verbunden, so dass eine geräuschanfällige Steckverzahnung entfallen kann. In vorteilhafter Weise wird dabei die Trennung der Drehmomentübertragungseinrichtung vor dem Zweimassenschwungrad vorgenommen, indem die Drehmomentübertragungseinrichtung in eine erste Baugruppe mit einem mit der Kurbelwelle verbundenen Antriebsteil und eine zweite Baugruppe mit dem Zweimassenschwungrad und der Doppelkupplung aufgeteilt wird. Die Verlegung der Trennstelle zwischen motorseitigen und getriebeseitigen Bauteilen in entsprechende Baugruppen sieht hierbei vor, dass vor einer Endmontage von Brennkraftmaschine und Doppelkupplungsgetriebe die erste Baugruppe an der Kurbelwelle vormontiert und die zweite Baugruppe auf dem Doppelkupplungsgetriebe angeordnet ist und bei der Endmontage die beiden Baugruppen radial außen lösbar miteinander verbunden werden. Die lösbare Verbindung erfolgt beispielsweise mittels durch die erste Baugruppe im Innengewinde der zweiten Baugruppe eingeschraubter Schrauben oder die erste Baugruppe durchgreifender Gewindestehbolzen der zweiten Baugruppe, auf die Muttern aufgeschraubt werden. Alternativ können Rastverbindungen vorgesehen sein, die gegen nachträgliches Lösen gesichert sind.

Zur Vereinfachung einer Fügung von erster und zweiter Baugruppe aufeinander, können Passstifte vorgesehen sein, an denen die Baugruppen aufeinander zentriert sind, wobei diese vorteilhafterweise an der zweiten Baugruppe axial ausgerichtet und über den Umfang verteilt vorgesehen sein können.

Das Antriebsteil kann als kreisrundes Scheibenteil oder mit sich radial von dem Aufnahmedurchmesser an der Kurbelwelle zu den Befestigungspunkten an der zweiten Baugruppe erstreckenden, über den Umfang verteilten Armen ausgebildet sein, wobei die Blechdicke des Antriebsteils so ausgelegt sein kann, dass eine axiale Elastizität zur Dämpfung von Axial- und/oder Taumelschwingungen der Kurbelwelle ausgeglichen werden kann. Dabei kann das Antriebsteil im Bereich der Kurbelwelle zumindest einseitig mit einer Verstärkungsscheibe verstärkt sein, so dass eine vorgegebene Schraubenlänge von Schrauben zur Befestigung des Antriebsteils an der Kurbelwelle zum Ausgleich von Zugspannungen, ein vorgegebener Abstand des Antriebsteils zum Gehäuse der Brennkraftmaschine eingestellt beziehungsweise die Stabilität des Antriebsteils im Bereich von dessen Aufnahme an der Kurbelwelle insbesondere bei Axial- und Taumelschwingungen stabilisiert werden kann.

Um eine effiziente Materialausnutzung mit unerwünschtem Stanzabfall der Drehmomentübertragungseinrichtung vorzusehen, können die Verstärkungsscheiben aus einem Stanzausbruch der aus Blech hergestellten übrigen Bauteile der Drehmomentübertragungseinrichtung hergestellt sein. Beispielsweise kann eine Verstärkungsscheibe aus einer aus der Herstellung des Eingangsteils oder eines mit diesem zur Bildung eines Ringraums für die Bogenfedern verbundenen Deckels abfallenden Ronde gebildet sein.

Infolge des Ausgleichs des Axialspiels innerhalb des Zweimassenschwungrads kann das Ausgangsteil des Zweimassenschwungrads fest mit dem Eingangsteil der Doppelkupplung unter Vermeidung einer Steckverzahnung verbunden werden. Hierzu kann ein Verbindungsteil dienen, das radial innen mit dem Ausgangsteil des Zweimassenschwungrads und radial außen mit dem Eingangsteil der Doppelkupplung, beispielsweise dem Kupplungsgehäuse und/oder einer zentralen Gegendruckplatte für die Anpressplatten der beiden die Doppelkupplung bildenden Reibungskupplungen, verbunden ist. Je nach Ausbildung der Unterbaugruppen der zweiten Baugruppe kann das Verbindungsteil vorab mit dem Ausgangsteil des Zweimassenschwungrads verbunden wie vernietet sein und zur Verbindung der Unterbaugruppen in Form des Zweimassenschwungrads und der Doppelkupplung verbunden wie vernietet werden. Alternativ kann das Verbindungsteil vorab an dem Eingangsteil der Doppelkupplung befestigt werden und nachher mit dem Ausgangsteil des Zweimassenschwungrads verbunden werden. Dabei wird aus Platzgründen gegebenenfalls eine einseitige Befestigung, beispielsweise eine Verschraubung oder Blindvernietung gewählt.

Gemäß einem vorteilhaften Ausführungsbeispiel werden die Bogenfedern in einem von dem Eingangsteil gebildeten Ringraum mit eingeprägten, eingangsseitigen Beaufschlagungsbereichen für die Stirnseiten der Bogenfedern aufgenommen, wobei von radial innen ausgangsseitige Beaufschlagungsbereiche eines Flanschteils für die Stirnseiten der Bogenfedern in den Ringraum eingreifen.

Zur gleichmäßigen Beaufschlagung der Stirnseiten der Bogenfedern insbesondere durch die Beaufschlagungsbereiche des Ausgangsteils, dessen Beaufschlagungsposition an der Stirnfläche der Bogenfedern infolge der Axialverlagerung der Doppelkupplung und abhängig von Axial- und/oder Taumelschwingungen wechselt, können zwischen den Beaufschlagungsbereichen und den Stirnseiten der Bogenfedern Federnäpfe vorgesehen sein. Alternativ hierzu können eine oder mehrere Endwindungen der Bogenfedern nach radial innen eingezogen sein, so dass insbesondere bei einer radialen Verlagerung des Ausgangsteils beispielsweise infolge von Taumelschwingungen oder bei radialem Achsversatz zwischen der Kurbelwellenachse und der Drehachse der als Hohlwelle ausgebildeten Getriebeeingangswelle des Doppelkupplungsgetriebes, das die Doppelkupplung beispielsweise an deren Gegendruckplatte verdrehbar aufnimmt, eine sichere Beaufschlagung durch die über den Umfang verteilten Beaufschlagungsbereiche des Flanschteils erhalten bleibt, ohne dass der radial äußere Bereich derer in den Innenumfang der Windungen der Bogenfedern einbricht.

Zum Ausgleich des Axialspiels sind die eingangsseitigen Beaufschlagungsmittel wie beidseitigen Einzüge des die Bogenfedern aufnehmenden Ringraums zumindest in Höhe des Axialspiels von den ausgangsseitigen Beaufschlagungsmitteln wie radial erweiterten und in den Ringraum radial einragenden Armen des Flanschteils axial beabstandet.

Gemäß einem vorteilhaften Ausführungsbeispiel werden die Bogenfedern axial begrenzt verlagerbar in dem Ringraum untergebracht, so dass sie bei einer Axialverlagerung des Ausgangsteils gegenüber dem Eingangsteil im Wesentlichen axial fixiert im Ringraum geführt sind und sich während eines Ausgleichs des Axialspiels gegenüber den ausgangsseitigen Beaufschlagungsbereichen axial verlagern. Bei dieser Anordnung wandern die ausgangsseitigen Beaufschlagungsmittel in Höhe des auszugleichenden Axialspiels der Doppelkupplung axial über die Stirnflächen der Bogenfedern, während diese im Wesentlichen axial gegenüber dem Eingangsteil axial fixiert in dem Ringraum geführt sind.

Alternativ hierzu können die Bogenfedern in Höhe des Axialspiels im Ringraum axial verlagerbar aufgenommen sein, wobei die ausgangsseitigen Beaufschlagungsmittel axial fest mit den Bogenfedern verbunden sind. Bei dieser Anordnung werden die Stirnseiten der Bogenfedern bevorzugt mittig von den ausgangsseitigen Beaufschlagungsbereichen beaufschlagt und die Stirnseiten wechseln bezüglich den eingangsseitigen Beaufschlagungsbereichen während eines Ausgleich des Axialspiels die Überlappungsbereiche wie -flächen. Es versteht sich, dass auch Mischformen mit lediglich teilweise gegenüber den ausgangsseitigen Beaufschlagungsbereichen fixierten Stirnflächen und mit Axialspiel im Ringraum aufgenommenen Bogenfedern vorteilhaft sein können.

Gemäß einem weiteren vorteilhaft ausgestalteten Ausführungsbeispiel ist zwischen dem Ringraum und dem Außenumfang der Bogenfedern eine Verschleißschutzschale vorgesehen, die eine Plattform in Höhe des Axialspiels aufweist. Auf diese Weise können die die ausgangsseitigen Beaufschlagungsbereiche bildenden radial erweiterten Arme des Flanschteils auf einem großen Durchmesser über das gesamte Axialspiel geführt werden, so dass ein Eindringen der Beaufschlagungsbereiche in den Innenraum der Bogenfederwindungen an den Stirnseiten der Bogenfedern bei vorhandener Schwingungsbelastung in Form von Axial- und/oder Taumelschwingungen des Eingangsteils gegenüber dem Ausgangsteil des Zweimassenschwungrads vermieden werden kann. Gegebenenfalls kann dadurch auf Federnäpfe beziehungsweise Federeinzüge verzichtet werden.

Nach dem erfinderischen Gedanken ist im Weiteren an dem Flanschteil beidseitig jeweils eine Dichtmembran befestigt, die jeweils an einem ringförmigen Ansatz des Ringraums unter zum Ausgleich des Axialspiels ausreichender Vorspannung angelegt sind. Dabei bildet zumindest eine der Dichtmembranen mit einem an dem jeweiligen ringförmigen Ansatz angeordneten Reibring eine Reibeinrichtung. Es hat sich jedoch als vorteilhaft erwiesen, wenn die Dichtmembranen in entgegengesetzte Richtung gegen einen Reibring des jeweiligen Ringraums verspannt sind und mittels der Dichtmembranen ein über das Axialspiel im Mittel konstantes Reibmoment eingestellt wird. Dabei wird die infolge einer Axialverlagerung des Flanschteils nachlassende Vorspannung einer Dichtmembran durch die erhöhte Vorspannung der anderen Dichtmembran ausgeglichen.

Die Erfindung wird anhand der in den Figuren 1 bis 10 gezeigten Ausführungsbeispiele näher erläutert. Dabei zeigen:
- Figur 1: einen Teilschnitt durch eine erfindungsgemäße Drehmomentübertragungseinrichtung,
- Figur 2: die Drehmomentübertragungseinrichtung der Figur 1 in Ansicht,
- Figur 3: ein Detail der Figur 1 mit den Verschraubungen zwischen Antriebsteil und Eingangsteil des Zweimassenschwungrads,
- Figur 4: ein Detail der Figur 1 mit den Nieten zur Vernietung der Dichtmembranen mit dem Flanschteil,
- Figur 5: ein Detail der Figur 1 mit der Verschraubung zwischen Verbindungsteil und Flanschteil,
- Figur 6: eine Detailansicht zur radialen Zentrierung von Flanschteil und Verbindungsteil,
- Figur 7: das Detail der Figur 6 im Schnitt,
- Figur 8: ein Detail der Figur 1 mit der Zentrierung des Antriebsteils auf dem Eingangsteil des Zweimassenschwungrads,
- Figur 9: einen Teilschnitt eines gegenüber der Drehmomentübertragungseinrichtung der Figur 1 leicht veränderten Variante einer Drehmomentübertragungseinrichtung und
- Figur 10: einen Teilschnitt einer gegenüber den Drehmomentübertragungseinrichtungen der Figuren 1 und 9 leicht veränderten Variante einer Drehmomentübertragungseinrichtung.

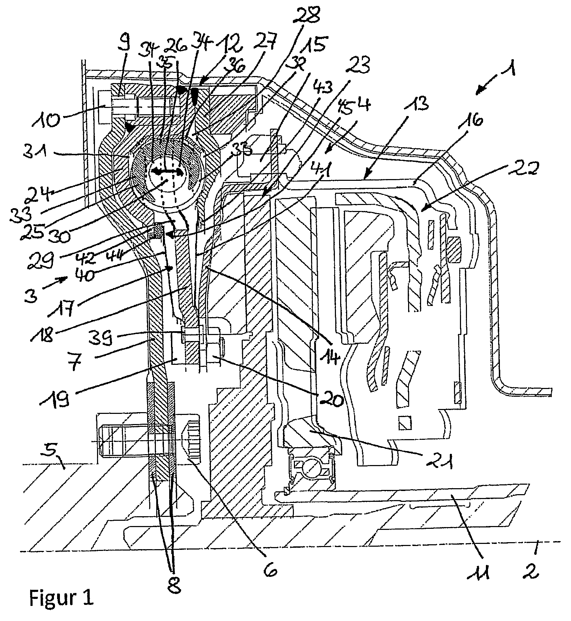

Die in Figur 1 im Teilschnitt gezeigte, um die Drehachse 2 verdrehbare Drehmomentübertragungseinrichtung 1 ist aus zwei Baugruppen 3, 4 gebildet. Die erste Baugruppe 3 enthält das mit der Kurbelwelle 5 mittels der Schrauben 6 fest aufgenommene Antriebsteil 7, das hier aus Blech gestanzt und entsprechend umgeformt ist. Beidseitig des Antriebsteils 7 sind im Bereich der Kurbelwelle 5 Verstärkungsscheiben 8 angeordnet, die die Festigkeit des axial zur Dämpfung von Axial- und Taumelschwingungen der Kurbelwelle 5 elastisch ausgebildeten Antriebsteils 7 erhöhen. Radial außen sind am Antriebsteil 7 Öffnungen 9 vorgesehen, durch die Schrauben 10 zur Befestigung der auf der als Hohlwelle ausgebildeten Getriebeeingangswelle 11 gelagerten zweiten Baugruppe 4 bei der Endmontage von Brennkraftmaschine und Doppelkupplungsgetriebe geführt werden.

Die zweite Baugruppe 4 ist aus dem Zweimassenschwungrad 12 und der Doppelkupplung 13 gebildet, die mittels des Verbindungsteils 14 fest und ohne Axialspiel miteinander verbunden sind. Hierzu ist das Verbindungsteil 14 radial außen mittels der Niete 15 mit dem Gehäuse 16 der Doppelkupplung 13 vernietet. Zur Verbindung von Unterbaugruppen in Form der Doppelkupplung 13 und des Zweimassenschwungrads 12 wird das Verbindungsteil 14 radial innen mit dem als Ausgangsteil 17 des Zweimassenschwungrads 12 vorgesehenen Flanschteil 18 mittels der Schrauben 19 verschraubt, wobei die Muttern 20 bereits fest mit dem Verbindungsteil 14 verbunden wie verschweißt oder in anderer Weise verdrehgesichert aufgenommen sind.

Infolge der konstruktiven Auslegung der Doppelkupplung 13, die mittels der radial außen mit dem Gehäuse 16 verbundenen Gegendruckplatte 21 verdrehbar auf der Getriebeeingangswelle 11 gelagert ist, tritt beispielsweise infolge einer axialen Belastung des Gehäuses 16 bei einer Betätigung der beiden zugedrückten Reibungskupplungen 22, 23 mittels eines - nicht dargestellten -, sich am ebenfalls nicht dargestellten Getriebegehäuse des Doppelkupplungsgetriebes abstützenden Betätigungssystems ein Axialspiel zwischen dem Eingangsteil 24 und dem Ausgangsteil 17 des Zweimassenschwungrads 12 auf, die entgegen der Bogenfedern 25 in Umfangsrichtung gegeneinander begrenzt verdrehbar sind.

Infolge des Axialspiels wird das Flanschteil 18 gegenüber dem Eingangsteil 24 in Richtung des Pfeils 26 axial verlagert. In dem gezeigten Ausführungsbeispiel sind die Bogenfedern 25 mit geringem Axialspiel in dem von dem Eingangsteil 24 und dem mit diesem verbundenen Deckel 27 gebildeten Ringraum 28 aufgenommen, so dass die durch die radial erweiterten Arme 29 des Flanschteils 18 gebildeten ausgangsseitigen Beaufschlagungsbereiche 30 ihre Position auf der Stirnfläche der Bogenfedern 25 abhängig vom Axialspiel ändern, während die Position der eingangsseitigen, durch die Einformungen 31, 32 im Eingangsteil 24 beziehungsweise im Deckel 27 gebildeten Beaufschlagungsbereiche 33 im Wesentlichen konstant bleibt. Zwischen den eingangsseitigen Beaufschlagungsbereichen 33 und den ausgangsseitigen Beaufschlagungsbereichen 30 wird dabei ein axialer Abstand 34 eingestellt, der zumindest dem Axialspiel des Ausgangsteils 17 und dem Eingangsteil 24 entspricht. Die Arme 29 sind radial mit geringem Abstand an die Verschleißschutzschale 35 geführt, um eine sichere Beaufschlagung der Stirnseiten der Bogenfedern 25 zu erzielen. Zur Beibehaltung des Radialspiels zwischen Verschleißschutzschale 35 und Armen 29 über den gesamten Bereich des Axialspiels weist diese über den Umfang ein axiales Plateau 36 auf, das in seiner axialen Erstreckung zumindest dem Axialspiel entspricht.

Der Ringraum 28 kann zur Schmierung der Bogenfedern 25 zumindest teilweise mit Schmiermittel wie Fett befüllt sein. Dementsprechend sind an dem Flanschteil 18 beidseitig mittels der Niete 39 befestigte Dichtmembranen 40, 41 vorgesehen, die axial gegen die Ringansätze 42, 43 des Eingangsteils 24 beziehungsweise des Deckels 27 verspannt sind. Die Dichtmembranen 40, 41 bilden bei einer Verdrehung von Eingangsteil 24 und Ausgangsteil 17 gegeneinander eine Reibungshysterese. Zur Ausbildung der Reibeinrichtung 45 ist zwischen der Dichtmembran 40 und dem Ringansatz 42 ein Reibring 44 fest an diesem angeordnet, auf dem die Dichtmembran unter Ausbildung eines verbesserten Reibkoeffizienten axial vorgespannt angelegt ist.

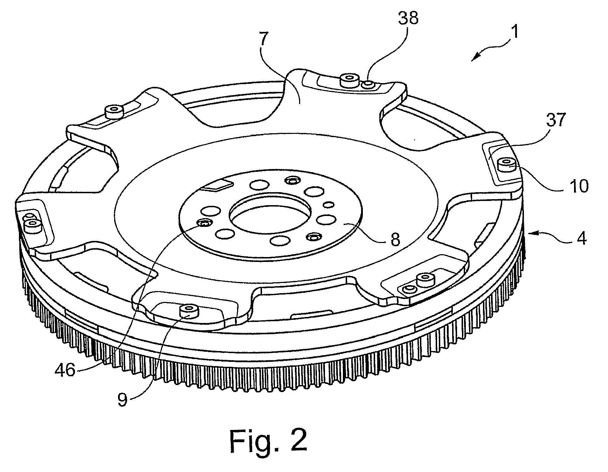

Figur 2 zeigt die Drehmomentübertragungseinrichtung 1 der Figur 1 in Ansicht mit Blick auf das Antriebsteil 7. Das Antriebsteil 7 weist über den Umfang verteilte, radial erweiterte Arme 37 auf, an denen jeweils eine Öffnung 9 zur Durchführung der Schrauben 10 angeordnet ist. Zur Zentrierung der Baugruppe 4 mit Zweimassenschwungrad 12 und Doppelkupplung 13 (Figur 1) auf dem Antriebsteil 7 sind an der Baugruppe 4 Passstifte 38 vorgesehen.

Die beidseitig des Antriebsteils 7 angeordneten Verstärkungsscheiben 8 sind gegeneinander vernietet, wobei in einer der Verstärkungsscheiben 8 Nietwarzen 46 ausgestellt sind, die mit der anderen Verstärkungsscheibe vernietet sind.

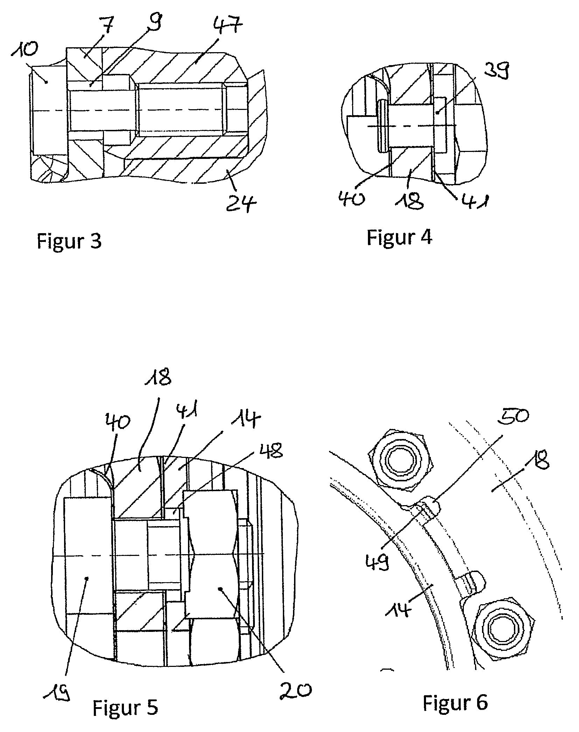

Figur 3 zeigt die Ausführung der Verbindung zwischen dem Antriebsteil 7 und dem Eingangsteil 24 des Zweimassenschwungrads im Detail. Dabei werden die Schrauben 10 durch gegenüber den Schrauben 10 spielbehaftete Öffnungen 9 geführt und mit einem mit dem Eingangsteil 24 verbundenen, beispielsweise verschweißten Verschraubungsring 47 beziehungsweise über den Umfang verteilten und mit dem Eingangsteil 24 verbundenen wie verschweißten Verschraubungsblöcken verschraubt.

Figur 4 zeigt im Detail die Vorvernietung wie Vorfixierung der Dichtmembranen 40, 41 an dem Flanschteil 18 mittels der Niete 39.

Wie aus dem Detail der Figur 5 hervorgeht, erfolgt eine endgültige Fixierung der Dichtmembranen 40, 41 an dem Flanschteil 18 mittels der Schrauben 19 zur Verbindung des Verbindungsteils 14 mit dem Flanschteil 18. Hierbei werden die Schrauben 19 in an dem Verbindungsteil 14 verdrehsicher angeordneten Muttern 20 gedreht, so dass eine einseitige Befestigung des Verbindungsteils 14 an dem Flanschteil 18 ermöglicht wird, da die Rückseite des Verbindungsteils 14 für eine Vernietung nicht zugänglich ist. Der Durchgriff der Schrauben 19 durch die Öffnungen 48 des Verbindungsteils 14 erfolgt spielbehaftet, so dass eine radiale Zentrierung des Verbindungsteils 14 auf dem Flanschteil erfolgen kann.

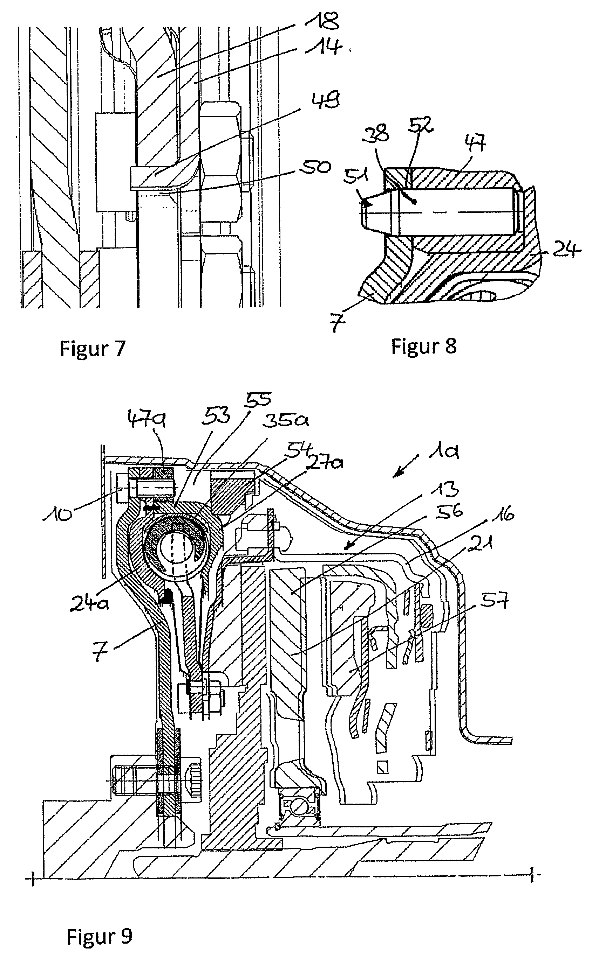

Hierzu wird aus der Teilansicht der Figur 6 die radiale Zentrierung durch am Innenumfang des Verbindungsteils 14 angeordnete radial erhabene und axial umgelegte Zungen 49 deutlich, die in entsprechende Ausnehmungen 50 des Flanschteils 18 eingreifen. Figur 7 zeigt das entsprechende Teil im Schnitt mit einer Schnittlinie entlang einer Zunge 49 des Verbindungsteils 14 mit der Ausnehmung 50 des Flanschteils 18.

Figur 8 zeigt im Detail die Zentrierung des Eingangsteils 24 auf dem Antriebsteil 7 mittels der Passstifte 38. Die Passstifte 38 sind in den Verschraubungsring 47 eingebracht, beispielsweise eingepresst, und weisen eine Einfuhrschräge 51 für die im Antriebsteil vorgesehenen Kalibrationsöffnungen 52 auf.

Die Figur 9 zeigt einen Teilschnitt der der Drehmomentübertragungseinrichtung 1 der Figur 1 ähnlichen Drehmomentübertragungseinrichtung 1a. Im Unterschied zu dieser ist das Eingangsteil 24a in geänderter Weise ausgestattet. Der Deckel 27a ist unmittelbar am Außenumfang der Verschleißschutzschale 35a mit einem axial in Richtung des Eingangsteils 24a axial angeformten Ansatz 53 versehen, der mit dem Eingangsteil 24a verschweißt ist. Das Eingangsteil 24a ist radial gegenüber dem Ansatz 53 erweitert und bildet die Verbindung mit dem Antriebsteil 7. Axial benachbart zu dem Außenumfang des Eingangsteils 24a ist der Verschraubungsring 47a zur Aufnahme der Schrauben 10 vorgesehen. Axial zwischen dem Verschraubungsring 47a und dem Anlasserzahnkranz 54 ist ein ringförmiger Freiraum 55 vorgesehen, der je nach Anforderungen an die primäre Schwungmasse, beispielsweise in Verbindung mit Dieselmotoren mit einem entsprechenden Schwungmasseanteil aufgefüllt werden kann, so dass die Drehmomentübertragungseinrichtung 1a modular auf verschiedene Typen von Brennkraftmaschinen und Antriebsstränge angestimmt werden kann. Der Vollständigkeit halber sei erwähnt, dass die sekundäre Schwungmasse der Drehmomentübertragungseinrichtungen 1, 1a durch die Bauteile der Doppelkupplung 13 wie Gegendruckplatte 21, Gehäuse 16, die Anpressplatten 56, 57 und dergleichen gebildet wird.

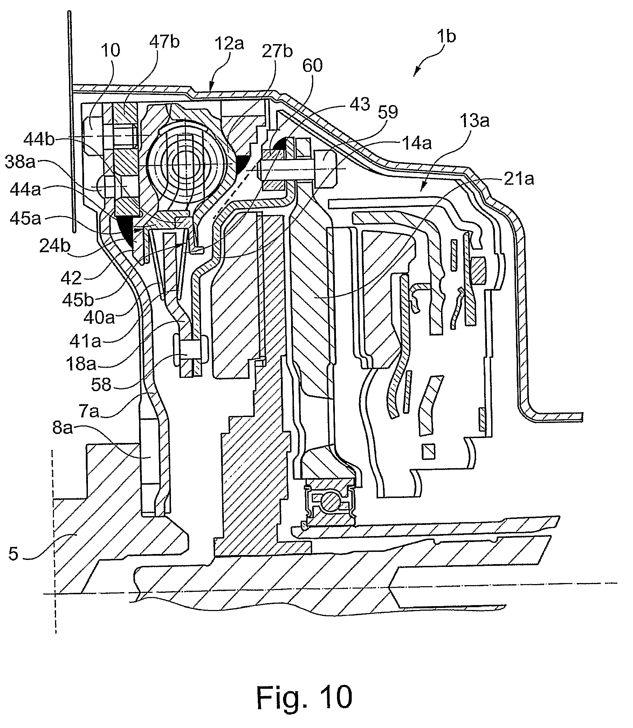

Figur 10 zeigt die den Drehmomentübertragungseinrichtungen 1,1a der Figuren 1 und 9 ähnliche Drehmomentübertragungseinrichtung 1 b im Teilschnitt. Im Unterschied hierzu sind die aus dem Zweimassenschwungrad 12a und der Doppelkupplung 13a gebildeten Unterbaugruppen mittels des Verbindungsteils 14a in anderer Weise gefügt. Das Verbindungsteil 14a ist an der Unterbaugruppe des Zweimassenschwungrads 12a mittels der Niete 58 fest aufgenommen und wird zur Verbindung der Unterbaugruppen mittels der Schrauben 59 mit der Gegendruckplatte 21a der Doppelkupplung 13a verbunden. Hierzu sind zur einseitigen Befestigung an dem Verbindungsteil 14a die Muttern 60 verdrehgesichert aufgenommen, beispielsweise verschweißt.

Im Weiteren sind die Dichtmembranen 40a, 41 a zur Ausbildung jeweils einer Reibeinrichtung 45a, 45b an dem Flanschteil 18a fest aufgenommen und gegen den am Eingangsteil 24b beziehungsweise am Deckel 27b fest aufgenommenen Reibring 44a, 44b verspannt. Bei einer Axialverlagerung des Flanschteils 18a-gegenüber dem Eingangsteil 24b wird abhängig von der Richtung der axialen Verlagerung eine Dichtmembran 40a, 41a stets stärker und die andere schwächer axial gegen den entsprechenden Reibring 44a, 44b vorgespannt, wodurch sich ein stärkeres und ein schwächeres Reibmoment an den Reibeinrichtungen 45a, 45b bei Verdrehung von Eingangsteil 24b und Ausgangsteil 17a gegeneinander ausbildet. In der Summe gleichen sich diese Reibmomente im Wesentlichen aus, so dass dieses über das auftretende Axialspiel zwischen Eingangsteil 24b und Ausgangsteil 17a im Wesentlichen konstant ist.

Ein weiterer Unterschied der Drehmomentübertragungseinrichtung 1b zu den Drehmomentübertragungseinrichtungen 1, 1a der Figuren 1 und 9 betrifft das Antriebsteil 7a, das lediglich eine Verstärkungsscheibe 8a zwischen Kurbelwelle 5 und Antriebsteil 7a aufweist. Im Weiteren sind die aus dem Verschraubungsring 47b vorzugsweise herausgedrückten Passstifte 38a zur Zentrierung des Zweimassenschwungrads 12a an dem Antriebsteil 7a radial innerhalb der Schrauben 10 angeordnet. Dementsprechend ist der Verschraubungsring 47b radial erweitert ausgeführt.

### Bezugszeichenliste

- 1: Drehmomentübertragungseinrichtung
- 1a: Drehmomentübertragungseinrichtung
- 1b: Drehmomentübertragungseinrichtung
- 2: Drehachse
- 3: Baugruppe
- 4: Baugruppe
- 5: Kurbelwelle
- 6: Schraube
- 7: Antriebsteil
- 7a: Antriebsteil
- 8: Verstärkungsscheibe
- 8a: Verstärkungsscheibe
- 9: Öffnung
- 10: Schraube
- 11: Getriebeeingangswelle
- 12: Zweimassenschwungrad
- 12a: Zweimassenschwungrad
- 13: Doppelkupplung
- 13a: Doppelkupplung
- 14: Verbindungsteil
- 14a: Verbindungsteil
- 15: Niet
- 16: Gehäuse
- 17: Ausgangsteil
- 17a: Ausgangsteil
- 18: Flanschteil
- 18a: Flanschteil
- 19: Schraube
- 20: Mutter
- 21: Gegendruckplatte
- 21a: Gegendruckplatte
- 22: Reibungskupplung
- 23: Reibungskupplung
- 24: Eingangsteil
- 24a: Eingangsteil
- 24b: Eingangsteil
- 25: Bogenfeder
- 26: Pfeil
- 27: Deckel
- 27a: Deckel
- 27b: Deckel
- 28: Ringraum
- 29: Arm
- 30: Beaufschlagungsbereich
- 31: Einformung
- 32: Einformung
- 33: Beaufschlagungsbereich
- 34: Abstand
- 35: Verschleißschutzschale
- 35a: Verschleißschutzschale
- 36: Plateau
- 37: Arm
- 38: Passstift
- 38a: Passstift
- 39: Niet
- 40: Dichtmembran
- 40a: Dichtmembran
- 41: Dichtmembran
- 41a: Dichtmembran
- 42: Ringansatz
- 43: Ringansatz
- 44: Reibring
- 44a: Reibring
- 44b: Reibring
- 45: Reibeinrichtung
- 45a: Reibeinrichtung
- 45b: Reibeinrichtung
- 46: Nietwarze
- 47: Verschraubungsring
- 47a: Verschraubungsring
- 47b: Verschraubungsring
- 48: Öffnung
- 49: Zunge
- 50: Ausnehmung
- 51: Einfuhrschräge
- 52: Kalibrationsöffnung
- 53: Ansatz
- 54: Anlasserzahnkranz
- 55: Freiraum
- 56: Anpressplatte
- 57: Anpressplatte
- 58: Niet
- 59: Schraube
- 60: Mutter

## Patentansprüche

1. Drehmomentübertragungseinrichtung (1, 1a, 1b) in einem Antriebsstrang eines Kraftfahrzeugs mit einem Zweimassenschwungrad (12, 12a) mit einem mit einer Kurbelwelle (5) einer Brennkraftmaschine fest verbundenen Eingangsteil (24, 24a, 24b) und einem entgegen der Wirkung von über den Umfang verteilten Bogenfedern (25) relativ gegenüber dem Eingangsteil (24, 24a, 24b) verdrehbaren Ausgangsteil (17, 17a) und einer dem Zweimassenschwungrad (12, 12a) nachgeschalteten, mit zwei Getriebeeingangswellen (11) eines Doppelkupplungsgetriebes wirksam verbundenen Doppelkupplung (13, 13a) sowie einem Ausgleich von Axialspiel der Doppelkupplung (13, 13a), **dadurch gekennzeichnet, dass** das Axialspiel zwischen dem Eingangsteil (24, 24a, 24b) und dem Ausgangsteil (17, 17a) des Zweimassenschwungrads (12, 12a) ausgeglichen wird.

2. Drehmomentübertragungseinrichtung (1) nach Anspruch 1, **dadurch gekennzeichnet, dass** die Drehmomentübertragungseinrichtung (1, 1a, 1b) aus einer ersten Baugruppe (3) mit einem mit der Kurbelwelle (5) verbundenen Antriebsteil (7, 7a) und einer zweiten Baugruppe (4) mit dem Zweimassenschwungrad (12, 12a) und der Doppelkupplung (13, 13a) gebildet ist.

3. Drehmomentübertragungseinrichtung (1, 1a, 1b) nach Anspruch 2, **dadurch gekennzeichnet, dass** vor einer Endmontage von Brennkraftmaschine und Doppelkupplungsgetriebe die erste Baugruppe (3) an der Kurbelwelle (5) vormontiert und die zweite Baugruppe (4) auf dem Doppelkupplungsgetriebe angeordnet ist und bei der Endmontage die beiden Baugruppen (3, 4) radial außen lösbar miteinander verbunden werden.

4. Drehmomentübertragungseinrichtung (1, 1a, 1b) nach Anspruch 3, **dadurch gekennzeichnet, dass** erste und zweite Baugruppe (3, 4) bei der Endmontage mittels über den Umfang verteilter Passstifte (38, 38a) aufeinander zentriert werden.

5. Drehmomentübertragungseinrichtung (1, 1a, 1b) nach Anspruch 4, **dadurch gekennzeichnet, dass** die Passstifte (38, 38a) an der zweiten Baugruppe (4) vorgesehen sind.

6. Drehmomentübertragungseinrichtung (1, 1a, 1 b) nach einem der Ansprüche 2 bis 5, **dadurch gekennzeichnet, dass** das Antriebsteil (7, 7a) im Bereich der Kurbelwelle (5) zumindest einseitig mit einer Verstärkungsscheibe (8, 8a) verstärkt ist.

7. Drehmomentübertragungseinrichtung (1, 1a, 1b) nach Anspruch 6, **dadurch gekennzeichnet, dass** die Verstärkungsscheibe (8, 8a) aus einem Stanzausbruch des aus Blech hergestellten Eingangsteils (24, 24a, 24b) des Zweimassenschwungrads (12, 12a) hergestellt ist.

8. Drehmomentübertragungseinrichtung (1, 1a, 1b) nach einem der Ansprüche 1 bis 7, **dadurch gekennzeichnet, dass** das Ausgangsteil (17, 17a) des Zweimassenschwungrads (12, 12a) und das Eingangsteil der Doppelkupplung (13, 13a) mit einem Verbindungsteil (14, 14a) jeweils fest verbunden sind.

9. Drehmomentübertragungseinrichtung (1, 1a, 1b) nach einem der Ansprüche 1 bis 8, **dadurch gekennzeichnet, dass** die Bogenfedern (25) in einem von dem Eingangsteil (24, 24a, 24b) gebildeten Ringraum (28) mit eingeprägten, eingangsseitigen Beaufschlagungsbereichen (33) für die Stirnseiten der Bogenfedern (25) aufgenommen sind und von radial innen ausgangsseitige Beaufschlagungsbereiche (30) eines Flanschteils (18, 18a) für die Stirnseiten der Bogenfedern (25) in den Ringraum (28) eingreifen.

10. Drehmomentübertragungseinrichtung (1, 1a, 1b) nach Anspruch 9, **dadurch gekennzeichnet, dass** zwischen den Beaufschlagungsbereichen (30, 33) und den Stirnseiten der Bogenfedern (25) Federnäpfe vorgesehen sind.

## Claims

1. Torque transmission device (1, 1a, 1b) in a drive train of a motor vehicle having a dual-mass flywheel (12, 12a) with an input part (24, 24a, 24b) which is connected fixedly to a crankshaft (5) of an internal combustion engine and an output part (17, 17a) which can be rotated with respect to the input part (24, 24a, 24b) counter to the action of bow springs (25) which are distributed over the circumference, and a double clutch (13, 13a) which is connected downstream of the dual-mass flywheel (12, 12a) and is connected actively to two transmission input shafts (11) of a double clutch transmission, and a compensating means for axial play of the double clutch (13, 13a), **characterized in that** the axial play is compensated between the input part (24, 24a, 24b) and the output part (17, 17a) of the dual-mass flywheel (12, 12a).

2. Torque transmission device (1) according to Claim 1, **characterized in that** the torque transmission device (1, 1a, 1b) is formed from a first assembly (3) having a drive part (7, 7a) which is connected to the crankshaft (5) and a second assembly (4) having the dual-mass flywheel (12, 12a) and the double clutch (13, 13a).

3. Torque transmission device (1, 1a, 1b) according to Claim 2, **characterized in that**, before final assembly of the internal combustion engine and the double clutch transmission, the first assembly (3) is pre-mounted on the crankshaft (5) and the second assembly (4) is arranged on the double clutch transmission and, during the final assembly, the two assemblies (3, 4) are connected to one another such that they can be released radially on the outside.

4. Torque transmission device (1, 1a, 1b) according to Claim 3, **characterized in that** the first and second assembly (3, 4) are centred with respect to one another during the final assembly by means of locating pins (38, 38a) which are distributed over the circumference.

5. Torque transmission device (1, 1a, 1b) according to Claim 4, **characterized in that** the locating pins (38, 38a) are provided on the second assembly (4).

6. Torque transmission device (1, 1a, 1b) according to one of Claims 2 to 5, **characterized in that** the drive part (7, 7a) is reinforced in the region of the crankshaft (5) at least on one side by way of a reinforcing disc (8, 8a).

7. Torque transmission device (1, 1a, 1b) according to Claim 6, **characterized in that** the reinforcing disc (8, 8a) is manufactured from a punching break-out of the input part (24, 24a, 24b) of the dual-mass flywheel (12, 12a), which input part (24, 24a, 24b) is manufactured from sheet metal.

8. Torque transmission device (1, 1a, 1b) according to one of Claims 1 to 7, **characterized in that** the output part (17, 17a) of the dual-mass flywheel (12, 12a) and the input part of the double clutch (13, 13a) are connected in each case fixedly to a connecting part (14, 14a).

9. Torque transmission device (1, 1a, 1b) according to one of Claims 1 to 8, **characterized in that** the bow springs (25) are received in an annular space (28) which is formed by the input part (24, 24a, 24b) with embossed, input-side loading regions (33) for the end sides of the bow springs (25), and output-side loading regions (30) of a flange part (18, 18a) for the end sides of the bow springs (25) engage radially from the inside into the annular space (28).

10. Torque transmission device (1, 1a, 1b) according to Claim 9, **characterized in that** spring bowls are provided between the loading regions (30, 33) and the end sides of the bow springs (25).

## Revendications

1. Dispositif de transfert de couple (1, 1a, 1b) dans une chaîne cinématique d'un véhicule automobile, comprenant un volant d'inertie à deux masses (12, 12a) avec une partie d'entrée (24, 24a, 24b) connectée fixement à un vilebrequin (5) d'un moteur à combustion interne et une partie de sortie (17, 17a) pouvant tourner par rapport à la partie d'entrée (24, 24a, 24b) à l'encontre de l'action de ressorts en arc (25) répartis sur la périphérie, et un double embrayage (13, 13a) monté en aval du volant d'inertie à deux masses (12 12a), connecté fonctionnellement à deux arbres d'entrée de transmission (11) d'une transmission à double embrayage ainsi qu'une compensation du jeu axial du double embrayage (13, 13a), **caractérisé en ce que** le jeu axial entre la partie d'entrée (24, 24a, 24b) et la partie de sortie (17, 17a) du volant d'inertie à deux masses (12, 12a) est compensé.

2. Dispositif de transfert de couple (1) selon la revendication 1, **caractérisé en ce que** le dispositif de transfert de couple (1, 1a, 1b) est formé d'un premier module (3) avec une partie d'entraînement (7, 7a) connectée au vilebrequin (5) et d'un deuxième module (4) avec le volant d'inertie à deux masses (12, 12a) et le double embrayage (13, 13a).

3. Dispositif de transfert de couple (1, 1a, 1b) selon la revendication 2, **caractérisé en ce qu'**avant un montage final du moteur à combustion interne et de la transmission à double embrayage, le premier module (3) est prémonté sur le vilebrequin (5) et le deuxième module (4) est disposé sur la transmission à double embrayage, et lors du montage final, les deux modules (3, 4) sont connectés l'un à l'autre radialement à l'extérieur de manière détachable.

4. Dispositif de transfert de couple (1, la, 1b) selon la revendication 3, **caractérisé en ce que** le premier et le deuxième module (3, 4), lors du montage final, sont centrés l'un sur l'autre au moyen de goupilles d'ajustement (38, 38a) réparties sur la périphérie.

5. Dispositif de transfert de couple (1, 1a, 1b) selon la revendication 4, **caractérisé en ce que** les goupilles d'ajustement (38, 38a) sont prévues sur le deuxième module (4).

6. Dispositif de transfert de couple (1, 1a, 1b) selon l'une quelconque des revendications 2 à 5, **caractérisé en ce que** la partie d'entraînement (7, 7a) est renforcée au moins d'un côté avec un disque de renforcement (8, 8a) dans la région du vilebrequin (5).

7. Dispositif de transfert de couple (1, 1a, 1b) selon la revendication 6, **caractérisé en ce que** le disque de renforcement (8, 8a) est fabriqué à partir d'une découpure par estampage de la partie d'entrée (24, 24a, 24b) du volant d'inertie à deux masses (12, 12a) fabriquée en tôle.

8. Dispositif de transfert de couple (1, 1a, 1b) selon l'une quelconque des revendications 1 à 7, **caractérisé en ce que** la partie de sortie (17, 17a) du volant d'inertie à deux masses (12, 12a) et la partie d'entrée du double embrayage (13, 13a) sont à chaque fois connectées fixement l'une à l'autre par une partie de connexion (14, 14a).

9. Dispositif de transfert de couple (1, 1a, 1b) selon l'une quelconque des revendications 1 à 8, **caractérisé en ce que** les ressorts en arc (25) sont reçus dans un espace annulaire (28) formé par la partie d'entrée (24, 24a, 24b) avec des régions de sollicitation gaufrées (33), du côté de l'entrée, pour les côtés frontaux des ressorts en arc (25), et s'engagent dans l'espace annulaire (28) depuis des régions de sollicitation, radialement internes (30), du côté de la sortie, d'une partie de bride (18, 18a) pour les côtés frontaux des ressorts en arc (25).

10. Dispositif de transfert de couple (1, 1a, 1b) selon la revendication 9, **caractérisé en ce qu'**entre les régions de sollicitation (30, 33) et les côtés frontaux des ressorts en arc (25) sont prévues des alvéoles de ressort.
